# EUROPÄISCHE PATENTSCHRIFT

(11) **EP 3 294 533 B1**
(45) Veröffentlichungstag und Bekanntmachung des Hinweises auf die Patenterteilung: **12.02.2020**
(21) Anmeldenummer: 16715991.2
(22) Anmeldetag: 03.03.2016
(51) Int. Cl.: B29C 70/38, B29C 70/56, B29C 70/54, B29C 31/08, B25J 15/00

(54) **GREIFER MIT ZUMINDEST EINEM KLEMMELEMENT**
GRIPPER HAVING AT LEAST ONE CLAMPING ELEMENT
DISPOSITIF DE PRÉHENSION MUNI D'AU MOINS UN ÉLÉMENT DE SERRAGE

(30) Priorität: 12.05.2015 AT 503892015
(43) Veröffentlichungstag der Anmeldung: 21.03.2018
(73) Patentinhaber: Fill Gesellschaft m.b.H., 4942 Gurten (AT)
(72) Erfinder: HEIECK, Frieder, 70178 Stuttgart (DE); SCHNEIDERBAUER, Michael, 4754 Andrichsfurt (AT); SEHRSCHÖN, Harald, 4924 Waldzell (AT); SZCESNY, Marko, 71287 Weissach (DE)
(74) Vertreter: Burger, Hannes
(86) Internationale Anmeldenummer: PCT/AT2016/050050
(87) Internationale Veröffentlichungsnummer: WO 2016/179616

(56) Entgegenhaltungen:
- EP-A1- 1 920 908
- EP-A1- 2 151 517
- DE-A1-102012 218 182
- FR-A1- 2 535 355

## Beschreibung

Die Erfindung betrifft eine Vorrichtung nach Anspruch 1 zur Herstellung eines Werkstückes aus zumindest einem folienförmigen Material, wobei die Vorrichtung eine dem Werkstück entsprechende Form für das folienförmige Material aufweist.

Weiters betrifft die Erfindung ein Verfahren nach Anspruch 7 zur Herstellung eines Werkstückes aus einem folienförmigen Material.

Unter dem Begriff Folie bzw. folienförmig wir in dem vorliegenden Zusammenhang eine flächige Struktur verstanden, die zumindest in Längsrichtung, bevorzugt auch in Querrichtung, biegsam ausgebildet ist, insbesondere Gewebe und vorimprägnierte Gewebe, Prepreg, textile Materialien etc.

In vielen Industriebereichen kommen heute Faserverbundwerkstoffe zum Einsatz, insbesondere in der Luftfahrt und der Automobilindustrie werden derartige Werkstoffe aufgrund ihres hohen Leichtbaupotentials immer häufiger eingesetzt. Die Herstellung von Bauteilen aus Faserverbund mit hohen Stückzahlen erfordert die Entwicklung neuer, automatisierter Verfahren, um eine kosteneffiziente Produktion zu ermöglichen.

Zur automatisierten Herstellung von Faserverbundbauteilen mit Kohlenstoff- oder Glasfaserhalbzeugen sind Prozesse notwendig, die eine definierte Ablage der textilen Materialien auf eine dreidimensional geformte Oberfläche ermöglichen.

Bei der Herstellung von Rotorblättern von Windenergieanlagen ist es beispielsweise bekannt, zur Erhöhung der Beulsteifigkeit Gurte in Längsrichtung entlang der Rotorblattinnenwandung aufzubringen. Diese Gurte werden üblicherweise aus Gelegebändern konstanter Breite im Laminierverfahren hergestellt. Bei derartigen Gelegebändern kann es sich beispielsweise um Laminate aus GFK Folien handeln. Neben der Herstellung von Rotorblättern können aus diesen Gelegebändern Gurte als Verstärkungs- oder strukturgebende Elemente auch bei zahlreichen anderen Anwendungen, wie beispielsweise in der Automobilindustrie, zum Einsatz kommen. Bei der Umformung von ebenen 2D-Halbzeugen in eine zweifach gekrümmte 3D-Form muss das Material allerdings deformiert werden, damit eine faltenfreie Ablage mit hoher Qualität gelingt. Insbesondere ist es hierfür notwendig, dass das Material Längenunterschiede in der Ablegerichtung auf der Formoberfläche ausgleichen kann, indem einzelne Faserbündel aneinander abgleiten können (Verformung durch Scherung). Dies ist umso wichtiger, je komplexer die Geometrie ist und je breiter der auf einmal abzulegen Streifen des folienförmigen Materials ist.

Eine Vorrichtung der eingangs genannten Art ist aus der FR2535355A1 bekannt geworden. Eine Vorrichtung zur Herstellung eines Werkstückes aus zumindest einem folienförmigen Material, welche eine dem Werkstück entsprechende Form für das folienförmige Material aufweist, ist auch aus der DE20105644 U1 bekannt geworden. Die Dokument DE102010040970, EP1920908A1, EP2151517A1 und DE1020122181 82A1 zeigen einschlägige Verfahren zur Bereitstellung eines Vorformlings für ein großflächiges Faserverbundbauteil.

Aus der WO2010129492 A ist weiters eine Vorrichtung bekannt geworden, bei welcher zum Ausbringen/Auslegen der Folie entlang einer länglichen Form mit einem konkaven Querschnitt zur Herstellung eines Gurtes für ein Rotorblatt an einem Ende der Form mehrere Speicherrollen des folienartigen Materials stationär in einem Gestell angeordnet sind. Von jeder dieser Rollen wird eine Folienlage abgezogen und in die Form gelegt. Nach erfolgtem Schichtaufbau werden die einzelnen Folienschichten durch Laminierung miteinander zu dem Gurt verbunden. Nachteilig an dem bekannten Stand der Technik ist es, dass es bei einer komplizierteren dreidimensionalen Oberflächengeometrie der Form zu einer Faltenbildung und/oder Verwerfungen des Materials kommen kann. Dies rührt vor allem daher, dass es bei der bekannten Lösung nicht möglich ist, die Folie Abschnittsweise unterschiedlich stark zu spannen bzw. zu dehnen. Bis jetzt sind auch keine Lösungen bekannt geworden, die es ermöglichen eine Folie über eine ganze Kante des Materials zu halten bzw. einzuklemmen und hierbei Bereiche des Materials unterschiedlich zu dehnen.

Es ist daher eine Aufgabe der Erfindung, die oben genannten Nachteile des Stands der Technik zu überwinden und die Ablage von folienartigen Materialien, insbesondere von unidirektionalen Faserhalbzeugen automatisiert auf dreidimensionale Werkzeugoberflächen mit hoher Formkomplexität faltenfrei ablegen zu können. Diese Aufgabe wird mit einer Vorrichtung nach Anspruch 1 gelöst.

Der segmentierte Greifer ermöglicht es, die während der Ablage des folienförmigen Materials auftretenden Längenunterschiede innerhalb der Bahn auszugleichen. Dies kann durch partielles Herausrutschen einzelner Abschnitte bzw. Fasern oder Faserbündel des Werkstoffes aus der Klemmung geschehen. Die Klemmkraft kann so eingestellt werden, dass die Bahn nicht durch ihr Eigengewicht aus der Klemmung rutscht. Wird die ein Abschnitt aber bei einem Andrücken an eine Form gespannt, kann dieser sich bewegen, bis das Kräftegleichgewicht wieder hergestellt ist. Dabei bleibt der benachbarte Abschnitt bzw. Faserbündel in Position, da auf diesen bzw. dieses keine oder geringere Zugkräfte wirken. Dadurch kann die Längenänderung bei einem Drapieren des folienförmigen Materials innerhalb der Bahn ausgeglichen werden.

Um eine exakt definierte Dehnbarkeit des folienförmigen Materials über die gesamte Länge des Klemmspaltes zu gewährleisten, kann es vorgesehen sein, dass die Segmente parallel zur Längserstreckung des Klemmspaltes die gleiche Länge aufweisen.

Da die Greifbacken der Bewegung eines Abschnitts der Folie während eines Spannens folgen können, kann bei dieser Variante der Erfindung verhindert werden, dass die Folie zwischen den Klemmelementen herausrutscht und es zu einer Verschmutzung des Greifers beispielsweise mit einem Harz der Folie kommt.

Weiters kann der Greifer ein Messer aufweisen. Auf diese Weise lässt sich eine Kante der Folie, die zwischen den Klemmelementen eingespannt ist, auf einfache Weise beschneiden, sodass ein späteres Besäumen dieser Kante nicht notwendig ist.

In einer weiteren Ausprägung kann auf das Messer verzichtet werden wenn im Zuschnitt des folienförmigen Materials die unterschiedliche Längenänderung unterschiedlicher Abschnitte des Materials vorgehalten wird. Hier wird über die Werkzeuggeometrie die segmentweise Länge des aufzulegenden folienförmigen Materials mit einem Algorithmus, insbesondere einem CAD-CAM Programms ermittelt und der Zuschnitt so gewählt das die über die Scherung des Materials entstehende Kante die Bauteilkante bildet. Die entstehende Bauteilkantengenauigkeit ist von der Segmentierung des Greifers abhängig. Der Vorteil dieses Verfahrens ist der Wegfall von Abfallstücken und der Einsparung von Material sowie der gewonnen Prozesszeit, da der Zuschnitt hauptzeitparallelstattfindet.

Ein Aufnehmen der konfektionierten Folie sowie ein Transportieren der aufgenommenen Folie zu der Form und ein Ablagen der Folie auf der Form mittels des Greifers lassen sich dadurch bewerkstelligen, dass der zumindest eine Greifer zumindest in zwei zueinander orthogonal verlaufende Richtungen linear bewegbar gelagert ist.

Ein optimales der Kontur der Form angepasstes Ablegen der Folie bzw. des Materials auf der Form lässt sich dadurch bewerkstelligen, dass der zumindest eine Greifer zumindest eine um zumindest eine Achse drehbar gelagert ist.

Um ein optimales Spannen der Folie zu gewährleisten, kann es vorgesehen sein, dass die Greifer jeweils in entlang dem Querträger verschiebbaren Führungen vertikal verschiebbar gelagert sind.

Um die quer zur Längserstreckung entstehende Abweichung bei unterschiedlich stark gekrümmten Werkzeuggeometrien ausgleichen zu können ist es vorteilhaft die Greifer jeweils quer zur Längserstreckung verschiebbar ist. Dies ist insbesondere dann erforderlich wenn die Greifer an einem gemeinsamen Querträger angeordnet sind. Die Abweichung entsteht durch die unterschiedliche Projektionslänge von gleichen Bogenlängen an unterschiedlich gekrümmten Flächen. Über mehrere parallel zueinander verlaufenden abgelegten Materialstreifen summieren sich diese Abweichungen.

Um ein optimales Ablegeergebnis bei stark unterschiedlichen Krümmungen quer zur Längserstreckung zu erreichen ist es vorteilhaft wenn die Folien bzw. das Material auch entlang der Längskante vorkonfektioniert sind. Speziell wenn die Längskante als Bauteilkante zusammenfällt. Durch die nun möglicherweise nicht mehr durchgängigen Folienabschnitte und/oder Faserbündel ist eine Anpassung der Klemmkräfte für den nicht durchgängigen Folienabschnitt vorgesehen.

Weiters kann es vorgesehen sein, dass die Greifer an den Führungen jeweils um zumindest eine, vorzugsweise parallel zu dem Querträger verlaufende, Achse drehbar gelagert sind. Alternativ zur Verwendung von Portalen kann der zumindest eine Greifer auch an zumindest einem Roboterarm angeordnet sein.

Als besonders günstig hat es sich herausgestellt, wenn der zumindest eine Anpresskopf zumindest eine Anpressrolle aufweist.

Um auf einfache Weise unterschiedliche Legerichtungen des folienförmigen Materials in die Form zu ermöglichen, kann es vorgesehen sein, dass die Form um zumindest eine Achse drehbar gelagert ist.

Ein vorkonfektionieren des Materials lässt sich dadurch einfach erreichen, dass die Vorrichtung eine Halterung für eine Speicherrolle des Materials sowie zumindest eine Schneidevorrichtung zum Zuschneiden des Materials aufweist.

Die oben genannte Aufgabe lässt sich auch mit einem Verfahren nach Anspruch 7 lösen.

Um die Möglichkeit unterschiedlicher Längsverschiebungen von Streifen der Bahn des Materials sicher zu stellen, kann es vorgesehen sein, dass vor Schritt ii) in die Bahn zueinander parallele Schnitte eingebracht werden, wobei der Abstand zwischen zwei Schnitten bevorzugterweise kleiner als die Länge eines Segmentes des zumindest einen, in Segmente unterteilten Klemmelementes jedes der Greifer oder gleich groß wie die Länge eines Segmentes des zumindest einen, in Segmente unterteilten Klemmelementes jedes der Greifer ist. Um die Position der Abschnitte zueinander zu halten ist es vorteilhaft wenn die Schnitte abgesetzt sind. Die Längsschnitte reduzieren somit die Scherfestigkeit zwischen zwei Abschnitten und können auch in der Tiefe nicht durchgängig ausgeführt werden.

Um auf einfache Weise unterschiedliche Legerichtungen des folienförmigen Materials in die Form zu ermöglichen, kann es vorgesehen sein, dass die Form um zumindest eine Achse drehbar gelagert ist.

Ein vorkonfektionieren des Materials lässt sich dadurch einfach erreichen, dass die Vorrichtung eine Halterung für eine Speicherrolle des Materials sowie zumindest eine Schneidevorrichtung zum Zuschneiden des Materials aufweist.

Die oben genannte Aufgabe lässt sich auch mit einem Verfahren der eingangs genannten Art erfindungsgemäß dadurch lösen, dass in einem Schritt i) eine Bahn des folienförmige Materials zurechtgeschnitten wird und diese Bahn in einem Schritt ii) mittels zweier Greifer, die gemäß den Ansprüchen 1 bis 6 ausgebildet sind, aufgenommen und über einer Form positioniert wird, wobei in einem Schritt iii) die Bahn mittels eines Anpresskopfes gegen die Form gepresst und mittels Bewegens des Anpresskopfes der Kontur der Form angepasst wird, wobei während Schritt iii) die Bahn mittels der Greifer gespannt wird. Zugleich ist es möglich im Schritt iii) die Ablage von der Längskante der Bahn auf die bereits abgelegte Längskante der zuvor abgelegten Bahn durch Bewegungen der Greifer definiert zu steuern. So kann ein Überlappen von abgelegten Bahnen verhindert werden oder ein definiertes maximales Spaltmass nicht überschritten werden. Insbesondere kann das erfindungsgemäße Verfahren mit einer Vorrichtung gemäß einem der Ansprüche 7 bis 18 durchgeführt werden.

Um die Möglichkeit unterschiedlicher Längsverschiebungen von Streifen der Bahn des Materials sicher zu stellen, kann es vorgesehen sein, dass vor Schritt ii) in die Bahn zueinander parallele Schnitte eingebracht werden, wobei der Abstand zwischen zwei Schnitten bevorzugterweise kleiner als die Länge eines Segmentes des zumindest einen, in Segmente unterteilten Klemmelementes jedes der Greifer oder gleich groß wie die Länge eines Segmentes des zumindest einen, in Segmente unterteilten Klemmelementes jedes der Greifer ist. Um die Position der Abschnitte zueinander zu halten ist es vorteilhaft wenn die Schnitte abgesetzt sind. Die Längsschnitte reduzieren somit die Scherfestigkeit zwischen zwei Abschnitten und können auch in der Tiefe nicht durchgängig ausgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer ersten Variante eines erfindungsgemäßen Greifers;
- Fig. 2: eine perspektivische Ansicht einer zweiten Variante eines erfindungsgemäßen Greifers;
- Fig. 3: eine perspektivische Ansicht einer dritten Variante eines erfindungsgemäßen Greifers;
- Fig. 4: Einen Querschnitt durch den in Fig. 3 dargestellten Greifer;
- Fig. 5: eine perspektivische Ansicht einer vierten Variante eines erfindungsgemäßen Greifers;
- Fig. 6: eine perspektivische Ansicht einer ersten Variante einer erfindungsgemäßen Vorrichtung.
- Fig. 7: eine perspektivische Ansicht einer zweiten Variante einer erfindungsgemäßen Vorrichtung.

Einführend sei festgehalten, dass in den unterschiedlich beschriebenen Ausführungsformen gleiche oder gleichartige Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

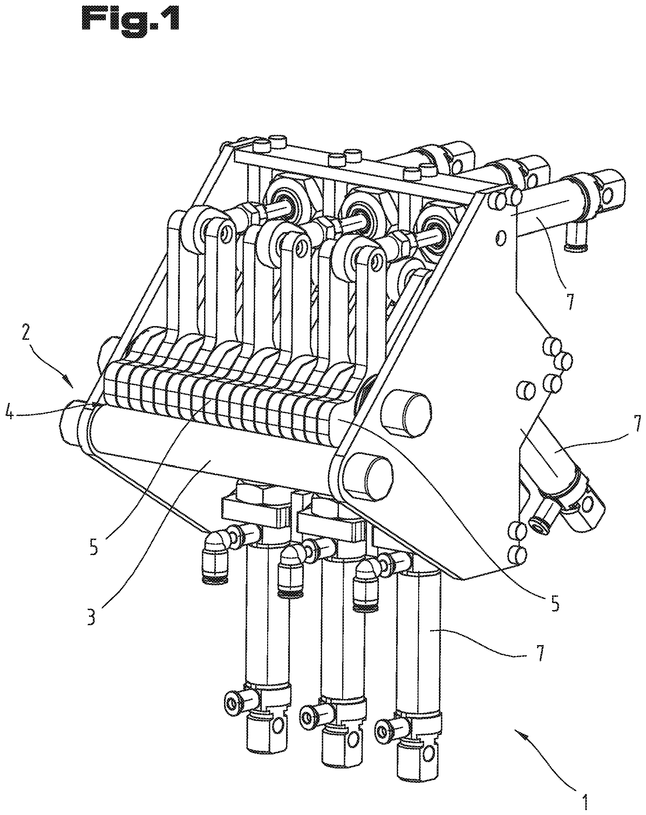

Gemäß Fig. 1 weist ein erfindungsgemäßer Greifer 1 ein erstes Klemmelement 2 und ein zweites Klemmelement 3 auf. Das erste Klemmelement 2 ist an einer ersten Seite eines Klemmspaltes 4 und das zweite Klemmelement 3 an einer der gegenüberliegenden Seite des Klemmspaltes 4 angeordnet. In der dargestellten Ausführungsform ist das Klemmelement 2 in Segmente 5 unterteilt, die zumindest in einer zu einer Längserstreckung des Klemmspaltes 4 parallelen Richtung voneinander getrennt sind. Das zweite Klemmelement 3 ist in der dargestellten Ausführungsform als Rolle ausgebildet. Die einzelnen Segment 5 können alle mit derselben Kraft oder mit unterschiedlichen Kräften beaufschlagt sein, dies kann beispielsweise mittels entsprechender Aktoren, beispielsweise hydraulischer, pneumatischer, hydropneumatischer Zylinder oder mechanischer oder elektromechanischer Aktoren erfolgen. Auch können die einzelnen Segmente 5 alle gemeinsam oder jedes für sich mit einer Feder belastet sein, welche die Segmente 5 gegen das zweite Klemmelement 3 drückt.

Durch die Trennung der Segmente 5 ist es möglich, dass sich bei lokal unterschiedlichen auf ein, in dem Greifer 1 gehaltenes Material wirkenden Zugkräfte einzelne Abschnitte des Materials, welche in ihrer Breite jeweils einem Segment 5 entsprechen, gegeneinander verschieben und somit in ein und demselben Material unterschiedliche Längsdehnungen bzw. Längsverschiebungen des Materials zu realisieren.

Der Greifer 1 bzw. der Klemmspalt 4 kann mittels eines oder mehrerer Aktoren geöffnet werden, welcher bzw. welche hierzu das erste Klemmelement 2 und/oder das zweite Klemmelement 3 bewegen.

Wie aus Fig. 1 weiter ersichtlich ist, können die Segmente 5 parallel zur Längserstreckung des Klemmspaltes die gleiche Länge aufweisen.

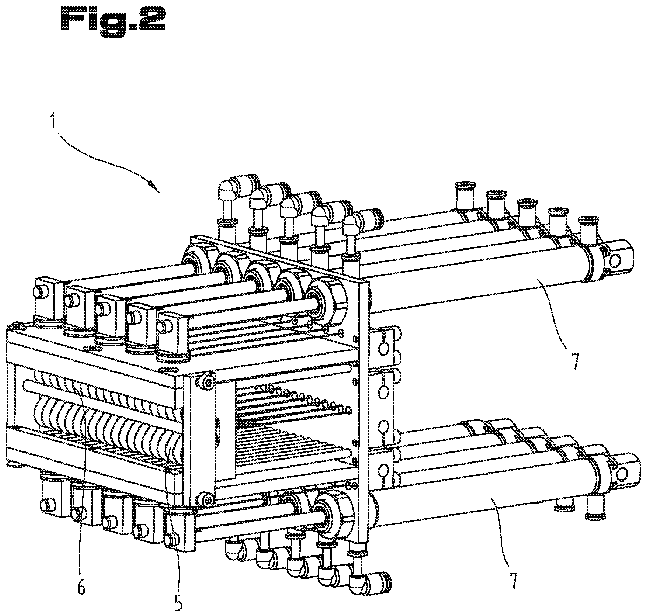

Gemäß Fig. 2 können sowohl das erste Klemmelement 2 als auch das zweite Klemmelement 3 in Segmente 5, 6 unterteilt sein, die zumindest in einer zu einer Längserstreckung des Klemmspaltes 4 parallelen Richtung voneinander getrennt sind. Jedem Segment 5 des ersten Klemmelements 2 kann hierbei ein Segment 6 des zweiten Klemmelements 3 gegenüberliegen. Ein Segment 5 des ersten Klemmelements 2 und ein Segment 6 des zweiten Klemmelements 3 bilden jeweils ein Paar von Greifbacken zwischen welchen ein folienartiges Material, insbesondere aus einem Faserverbundwerkstoff, eingeklemmt werden kann. Die ein Paar von Greifbacken bildenden Segmente 5, 6 können normal oder quer zur Längserstreckung des Klemmspaltes 4 verschiebbar gelagert sein. Auf diese Weise können die Greifbacken im Fall einer auf den darin eingeklemmten Abschnitt des Materials wirkenden Zugkraft sich in Richtung dieser Zugkraft bewegen. Dies verhindert Verschmutzungen, die auftreten können, falls die Segmente 5, 6 in Richtung der Zugkraft unbeweglich in dem Greifer 1 angeordnet wären. Derartige Verschmutzungen können daher rühren, dass ein Abschnitt des eingeklemmten Materials aus einem Paar von Segmenten 5, 6 herausgezogen und ein als Matrix dienendes Material des Materials, beispielsweise Harz, abgestriffen werden könnte.

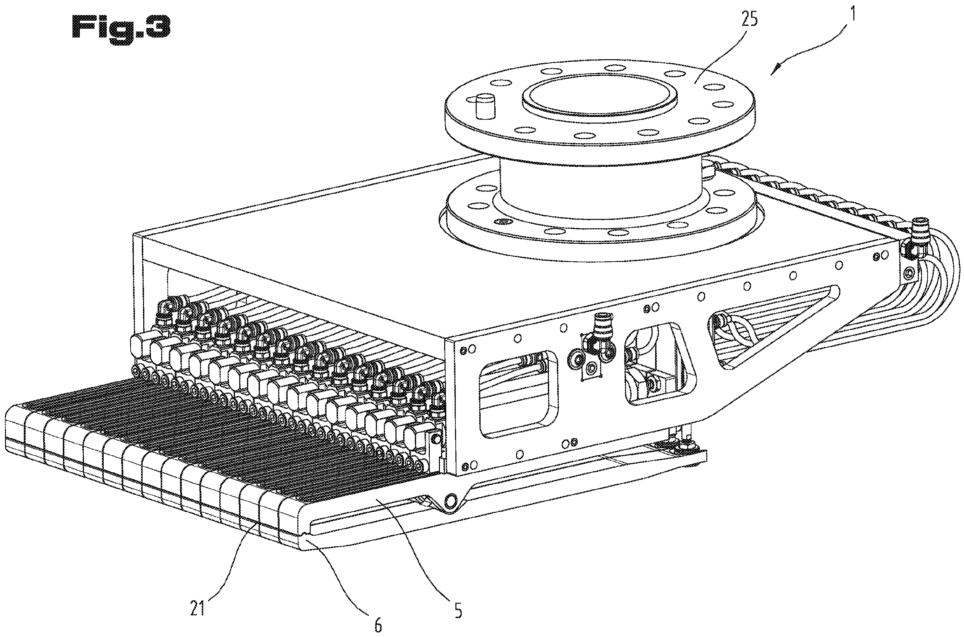

Durch die lineare Beweglichkeit der Segmente 5, 6 quer zum Klemmspalt 4 können die in Fig. 2 und 3 dargestellten Greifer 2 in Gegensatz zu dem in Fig. 1 dargestellten (passiven) Greifer durch Verschieben mindestens eines Paars von Greifbacken aktiv eine Zugkraft erzeugen und so nebeneinander liegende Faserbündel des Materials gegeneinander in einer Längsrichtung verschieben. Die einzelnen Paare von Greifbacken, die durch die Segmente 5, 6 gebildet sind, können hierzu einzeln angesteuert bzw. einzeln mittels Aktoren verschoben werden. Die Greifbacken bzw. die Segmente 5 und 6 können zur Erzeugung einer aktiven Zugkraft mittels Zylindern 27, beispielsweise Pneumatik- oder Hydraulikzylindern oder hydropneumatischen Zylindern linear verschoben werden.

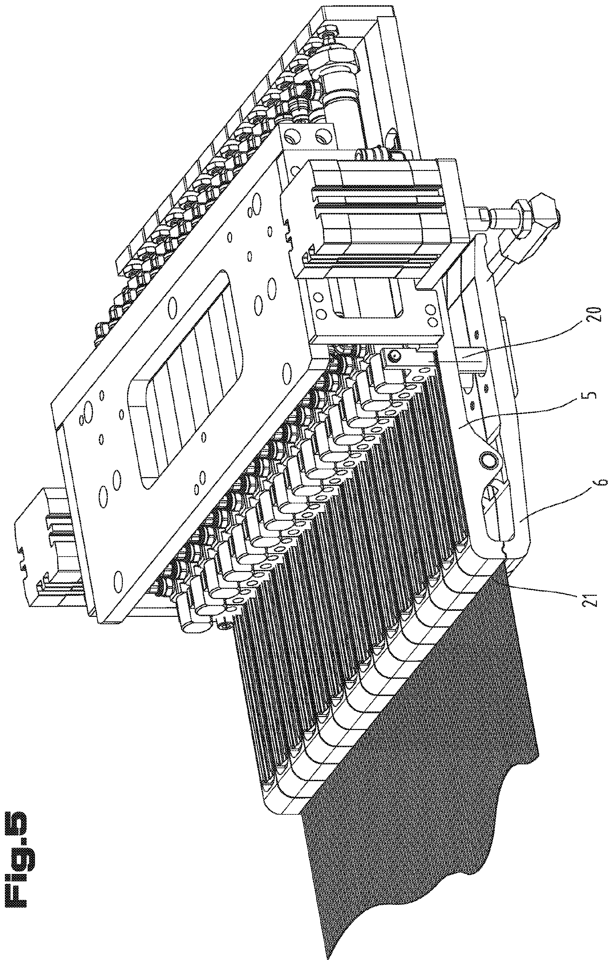

Paare von Segmente 5, 6 können jeweils mit einer Feder 20 belastet sein, welche Halteabschnitte 21 der Segmente 5 und 6 zangenartig zusammendrücken, wie dies in Fig. 5 dargestellt ist. Durch die Federn 20 werden die Greifbacken geschlossen. Zum Öffnen können die Greifbacken mittels entgegen der Kraft der Federn 20 wirkender Aktoren wieder geöffnet werden.

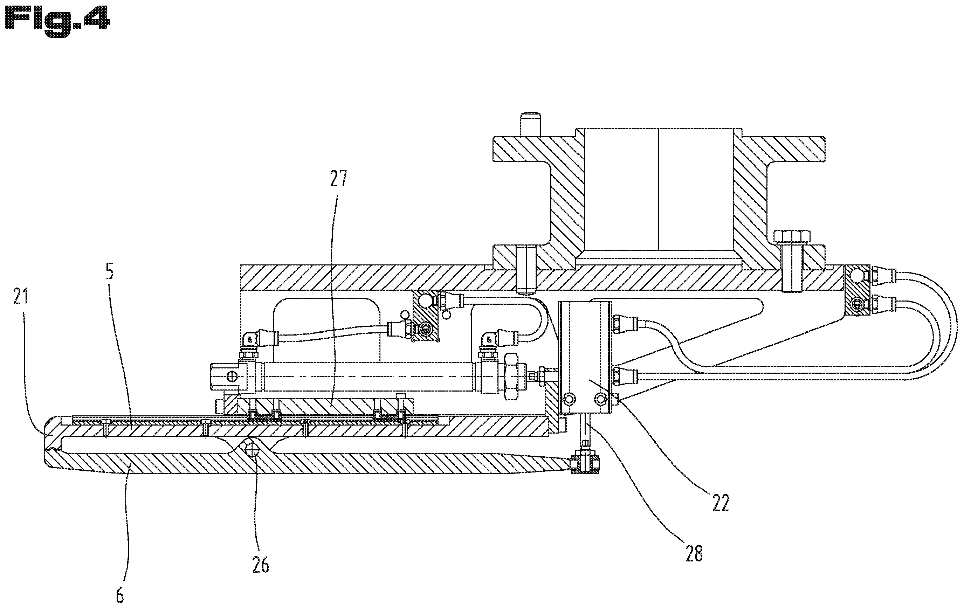

Wie aus Fig. 4 ersichtlich ist, können anstelle der Federn 20 auch Zylinder 22 zur Betätigung der Segmente 5, 6 angeordnet sein. Durch Beaufschlagen eines Kolbens des Zylinders 22 mit Druck wird das Segment 6 der Greifbacke um das Drehgelenk 26 gedreht und der vordere Halteabschnitt 21 der Greifbacke wird geschlossen.

Die Halteabschnitte 21 der Segmente 5 und 6 können durch Beaufschlagung mittels einer Öffnungskraft wieder von einander weg bewegt und so die Greifbacken geöffnet werden. Die Öffnungskraft kann mittels eines oder mehrerer entsprechender Aktoren, beispielsweise mittels Zylindern, wie Pneumatik- oder Hydraulikzylindern oder hydropneumatischen Zylindern, erzeugt werden.

Darüber hinaus kann der Greifer 1 ein Messer aufweisen, um eine Kante eines eingeklemmten Materials beschneiden zu können.

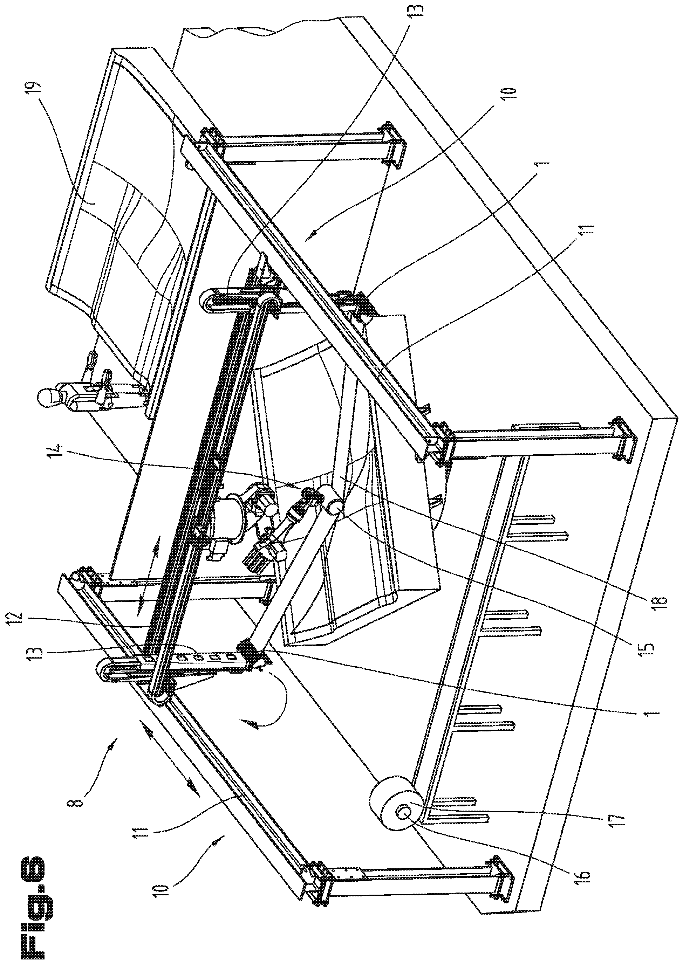

Nach Fig. 6 weist eine erfindungsgemäße Vorrichtung 8 zur Herstellung eines Werkstückes aus einem folienförmigen Material, beispielsweise einem Prepreg oder einem anderen textilen mit einem Harz versehenen Material, eine dem Werkstück entsprechende Form 9 auf, in welche das Material gelegt wird. Weiters weist die Vorrichtung 8 zwei Greifer 1 auf, die beide so wie oben beschrieben und in Fig.1 oder Fig. 2 - Fig. 5 dargestellt ausgebildet sein können.

Die Greifer 1 können mindestens in zwei zueinander orthogonal verlaufende Richtungen linear bewegbar gelagert und um mindestens eine Achse drehbar gelagert sein. Die Bewegungsrichtungen der Greifer 1 sind in Fig. 3 mit Pfeilen angedeutet.

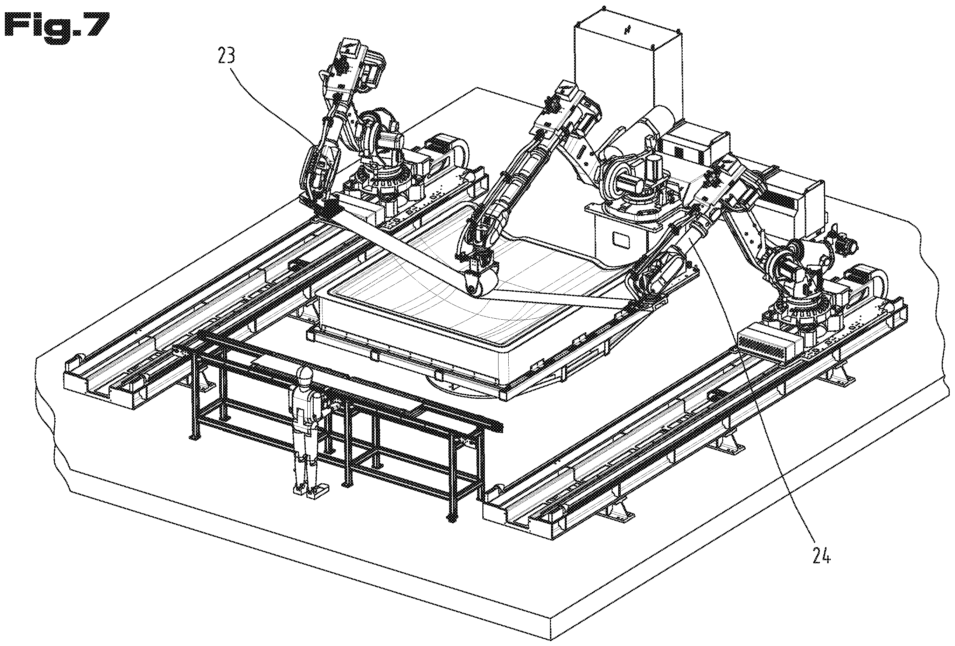

Die Greifer 1 können beispielsweise an zwei einander gegenüberliegende Portalen 10 der Vorrichtung 8 linear verschiebbar angeordnet sein. Zwischen den beiden Portalen 10 kann ein zwei Längsträger 11 der Portale verbindender Querträger 12 angeordnet sein. Der Querträger 12 kann in einer Längserstreckung der Längsträger 11 an diesen verschiebbar geführt sein. Die Greifer 1 wiederum können entlang dem Querträger 12 und quer zu der Längserstreckung der Längsträger 11 verschiebbar gelagert sein. Darüber hinaus können die Greifer 1 jeweils in entlang dem Querträger 12 verschiebbaren Führungen 13 vertikal verschiebbar sein. Auch können die Greifer 1 an den Führungen 13 jeweils um zumindest eine, vorzugsweise parallel zu dem Querträger 12 verlaufende, Achse drehbar gelagert sein. An dieser Stelle sei darauf hingewiesen, dass anstelle der in Fig. 3 dargestellten Ausführungsformen mit Portalen 10 auch Ausführungsformen ohne diese Portale möglich sind, wobei die Greifer 1 beispielsweise an zumindest einem Roboterarm 23, 24 angeordnet sein können, wie dies in Fig. 7 dargestellt ist. Der Greifer 1 kann einen Flansch 25 zur Verbindung mit einem der Roboterarme 23, 24 aufweisen, wie dies auch in Fig. 3 dargestellt ist.

Die Vorrichtung 8 weist einen mit der Form 9 zusammenwirkenden Anpresskopf 14 für das Material auf. Der Anpresskopf 14 kann beispielsweise eine Anpressrolle 15 aufweisen. Die Form 9 kann um eine (vertikale) Achse drehbar gelagert sein. Weiters kann die Vorrichtung 8 eine Halterung 16 für eine Speicherrolle 17 des Materials sowie zumindest eine Schneidevorrichtung zum Zuschneiden des Materials aufweisen. Die Halterung 16 ist in Fig. 3 durch eine quer durch die Speicherrolle 17 verlaufende Drehachse angedeutet.

Gemäß dem erfindungsgemäßen Verfahren zur Herstellung eines Werkstückes 19 wird in einem Schritt i) eine Bahn 18 des Materials zurechtgeschnitten. Das Material kann beispielsweise von der Speicherrolle 17 abgezogen und mittels der in dem letzten Absatz erwähnten Schneidevorrichtung zugeschnitten werden. Die Bahn 18 wird in einem Schritt ii) mittels der Greifer 1, erfasst und über der Form 9 positioniert. In einem Schritt iii) wird die Bahn 18 mittels eines Anpresskopfes 14 gegen die Form 9 gepresst und mittels Bewegens des Anpresskopfes der Kontur der Form angepasst, hierbei wird die Bahn 18 mittels der Greifer 1 gespannt. Das Ablegen der Bahn 18 kann computergesteuert erfolgen und mit einer Kamera beispielsweise hinsichtlich einer Spalten- oder Faltenbildung überwacht werden und die Greifer 1 entsprechend gesteuert werden, um Fehler bei dem Anpassen der Bahn 18 an die Form 9 zu verhindern. Dabei erfolgt ein automatischer Ausgleich der Längenunterschiede in der Bahn durch die Greifer zum Vermeiden von Falten bei der Ablage. Nach erfolgtem Ablegen der Bahn 18 können die Greifer 1 wieder in eine Aufnahmeposition zurückfahren und eine neue Bahn 18 aufnehmen. Die für die Ablage von Faserhalbzeugen auf einer nicht abwickelbaren Geometrie notwendigen Schritte und Komponenten sind hierbei räumlich und zeitlich voneinander getrennt. Um auch Bahnen 18 mit schräg verlaufenden Kanten sicher aufnehmen zu können, können die die einzelnen Greifbacken der Greifer 1 in der Aufnahmeposition unterschiedlich weit herausgefahren sein.

Zur Herstellung des Werkstückes 19 können mehrere Lagen der Bahnen 18 übereinander abgelegt werden, wobei sich eine Orientierung der Bahnen 18 zueinander ändern kann. So können die Bahnen 18 beispielsweise auch schräg oder quer zueinander abgelegt werden. Bei den Bahnen 18 handelt es sich bevorzugt um Faserverbundmatten, insbesondere um unidirektionale Faserverbundmatten - also Matten mit im Wesentlichen parallel zueinander verlaufenden Fasern, die in einer Matrix, beispielsweise aus Harz, Klebestoff oder einem thermoplastischen Material, eingebettet sind.

An dieser Stelle sei auch erwähnt, dass es von Vorteil ist, wenn ein Anpressen der Bahn 18 an die Form 9 in einem mittleren Bereich der Form 9 bzw. dem höchsten Punkt der Form 9 beginnt, da sich auf diese Weise eine höhere Legegenauigkeit erzielen lässt.

Die Form 9 kann vor dem Ablegen der Bahn in eine gewünschte Position gedreht bzw. gegenüber der Bahn 18 ausgerichtet werden. Darüber hinaus können die Form 9 und/oder der Anpresskopf 14 beheizt sein, um ein Verbinden (Laminieren) einzelner übereinander abgelegter Lagen von Bahnen 18 miteinander zu erleichtern bzw. zu ermöglichen.

Um eine gute Längsverschiebbarkeit von Faserbündeln der Bahn 18, die von unterschiedlichen benachbarten Segmenten 5, 6 der Greifer 1 eingeklemmt sind, zu gewährleisten können vor Schritt ii) in die Bahn 18 zueinander parallele Schnitte eingebracht werden. Der Abstand zwischen zwei Schnitten kann der Länge eines Segmentes 5, 6 entsprechen oder aber auch kleiner oder größer sein. Unidirektionale Faserhalbzeuge, wie sie hier für die Bahn 18 verwendet werden können, werden in der Regel durch Klebefäden oder Nähfäden stabilisiert, damit das Material gut handhabbar ist. Diese Fäden behindern aber die Verschiebbarkeit der einzelnen Rovings der Bahn zueinander. Deshalb ist es sinnvoll, diese Kettfäden in Bereichen mit hohem Umformgrad vorher zu durchtrennen. Dies kann bei der erfindungsgemäßen Anlage beispielsweise mittels eines CNC Cutters, der Längs zur Faser die Fixierfäden durchtrennt, ohne dabei die Faserstruktur wesentlich zu schädigen, erfolgen. Außerdem kann der Cutter das Halbzeug in die aktuell benötigte Bahnlänge auftrennen. Auf diese Weise können handelsübliche Halbzeuge einfach nach den aktuellen Erfordernissen maßgeschneidert werden. Weiters kann das Material Längenunterschiede in einer Ablegerichtung auf der Oberfläche der Form ausgleichen, indem einzelne Faserbündel aneinander abgleiten können (Verformung durch Scherung).

### Bezugszeichenaufstellung

- 1: Greifer
- 2: Klemmelement
- 3: Klemmelement
- 4: Klemmspalt
- 5: Segment
- 6: Segment
- 7: Aktor
- 8: Vorrichtung
- 9: Form
- 10: Portal
- 11: Längsträger
- 12: Querträger
- 13: Führung
- 14: Anpresskopf
- 15: Anpressrolle
- 16: Halterung
- 17: Speicherrolle
- 18: Bahn
- 19: Werkstück
- 20: Feder
- 21: Halteabschnitt
- 22: Zylinder
- 23: Roboterarm
- 24: Roboterarm
- 25: Flansch
- 26: Drehgelenk
- 27: Zylinder
- 28: Kolben

## Patentansprüche

1. Vorrichtung (8) zur Herstellung eines Werkstückes aus zumindest einem folienförmigen Material, wobei die Vorrichtung (8) eine dem Werkstück entsprechende Form (9) für das folienförmige Material aufweist, wobei die Vorrichtung zumindest einen mit der Form (9) zusammenwirkenden Anpresskopf (14) für das folienförmige Material aufweist, wobei die Vorrichtung zumindest zwei Greifer (1) mit zumindest einem ersten Klemmelement (2) und zumindest einem zweiten Klemmelement (3), wobei das zumindest eine erste Klemmelement (2) an einer ersten Seite eines Klemmspaltes (4) und das zumindest eine zweite Klemmelement (3) an einer zweiten, der ersten Seite gegenüberliegenden Seite des Klemmspaltes (4) angeordnet ist, wobei zumindest eines der Klemmelemente (2, 3) in Segmente (5, 6) unterteilt ist, die zumindest in einer zu einer Längserstreckung des Klemmspaltes (4) parallelen Richtung voneinander getrennt sind, wobei sowohl das zumindest eine erste Klemmelement (2) als auch das zumindest eine zweite Klemmelement (3) in Segmente (5, 6) unterteilt sind, die zumindest in einer zu einer Längserstreckung des Klemmspaltes (4) parallelen Richtung voneinander getrennt sind, wobei jedem Segment (5) des zumindest einem ersten Klemmelements (2) ein Segment (6) des zumindest einen zweiten Klemmelements (3) gegenüberliegt, wobei ein Segment (5) des zumindest einen ersten Klemmelements (2) und ein diesem Segment (5) gegenüberliegendes Segment (6) des zumindest einen zweiten Klemmelements (3) ein Paar von Greifbacken bilden, wobei die ein Paar von Greifbacken bildenden Segmente (5, 6) in einer normal oder quer zur Längserstreckung des Klemmspaltes (4) verlaufenden Richtung verschiebbar gelagert sind,
wobei die zumindest zwei Greifer (1) sind je an zumindest einem Roboterarm (23, 24) angeordnet;
oder die Vorrichtung weist
zumindest zwei einander gegenüberliegende Portale (10) auf, wobei jeder der zumindest zwei Greifer (1) entlang eines der zumindest zwei Portale (10) linear verschiebbar ist, wobei zwischen den beiden Portalen (10) ein Längsträger (11) der beiden Portale verbindender Querträger (12) angeordnet ist, wobei der Querträger (12) in einer Längserstreckung der Längsträger (11) an diesen verschiebbar gelagert ist, und wobei die zumindest zwei Greifer (1) entlang dem Querträger (12) und quer zu der Längserstreckung der Längsträger (11) verschiebbar gelagert, sind.

2. Vorrichtung nach Anspruch 1, **dadurch gekennzeichnet, dass** die Greifer (1) jeweils in entlang dem Querträger (12) verschiebbaren Führungen (13) vertikal verschiebbar gelagert sind.

3. Vorrichtung nach Anspruch 1 oder 2, **dadurch gekennzeichnet, dass** die Greifer (1) an den Führungen (13) jeweils um zumindest eine, vorzugsweise parallel zu dem Querträger (12) verlaufende, Achse drehbar gelagert sind.

4. Vorrichtung nach einem der Ansprüche 1 bis 3, **dadurch gekennzeichnet, dass** der zumindest eine Anpresskopf (14) zumindest eine Anpressrolle (15) aufweist.

5. Vorrichtung nach einem der Ansprüche 1 bis 4, **dadurch gekennzeichnet, dass** die Form (9) um zumindest eine Achse drehbar gelagert ist.

6. Vorrichtung nach einem der Ansprüche 1 bis 5, **dadurch gekennzeichnet, dass** sie eine Halterung (16) für eine Speicherrolle (17) des folienförmigen Materials sowie zumindest eine Schneidevorrichtung zum Zuschneiden des folienförmigen Materials aufweist.

7. Verfahren zur Herstellung eines Werkstückes (19) aus einem folienförmigen Material, **dadurch gekennzeichnet, dass** in einem Schritt i) eine Bahn (18) des folienförmige Materials zurechtgeschnitten wird und diese Bahn (18) in einem Schritt ii) mittels zweier Greifer (1), die je mit zumindest einem ersten Klemmelement (2) und zumindest einem zweiten Klemmelement (3) ausgebildet sind, wobei das zumindest eine erste Klemmelement (2) an einer ersten Seite eines Klemmspaltes (4) und das zumindest eine zweite Klemmelement (3) an einer zweiten, der ersten Seite gegenüberliegenden Seite des Klemmspaltes (4) angeordnet ist, wobei zumindest eines der Klemmelemente (2, 3) in Segmente (5, 6) unterteilt ist, die zumindest in einer zu einer Längserstreckung des Klemmspaltes (4) parallelen Richtung voneinander getrennt sind, wobei sowohl das zumindest eine erste Klemmelement (2) als auch das zumindest eine zweite Klemmelement (3) in Segmente (5, 6) unterteilt sind, die zumindest in einer zu einer Längserstreckung des Klemmspaltes (4) parallelen Richtung voneinander getrennt sind, wobei jedem Segment (5) des zumindest einem ersten Klemmelements (2) ein Segment (6) des zumindest einen zweiten Klemmelements (3) gegenüberliegt, wobei ein Segment (5) des zumindest einen ersten Klemmelements (2) und ein diesem Segment (5) gegenüberliegendes Segment (6) des zumindest einen zweiten Klemmelements (3) ein Paar von Greifbacken bilden, wobei die ein Paar von Greifbacken bildenden Segmente (5, 6) in einer normal oder quer zur Längserstreckung des Klemmspaltes (4) verlaufenden Richtung verschiebbar gelagert sind, aufgenommen und über einer Form (9) positioniert wird, wobei in einem Schritt iii) die Bahn (18) mittels eines Anpresskopfes (14) gegen die Form (9) gepresst und mittels Bewegens des Anpresskopfes der Kontur der Form angepasst wird, wobei während Schritt iii) die Bahn mittels der Greifer (1) gespannt wird.

8. Verfahren nach Anspruch 7, **dadurch gekennzeichnet, dass** vor Schritt ii) in die Bahn zueinander parallele Schnitte eingebracht werden.

9. Verfahren nach Anspruch 7 oder 8, **dadurch gekennzeichnet, dass** die Bahn (18) während Schritt iii) durch Bewegungen der Greifer (1) insbesondere quer zur Längserstreckung an eine vorabgelegte Bahn definiert abgelegt wird.

## Claims

1. A device (8) for producing a workpiece from at least one sheet-like material, wherein the device (8) comprises a mold (9) corresponding to the workpiece for the sheet-like material, wherein the device comprises at least one pressing head (14) for the sheet-like material cooperating with the mold (9), wherein the device comprises at least two grippers (1) with at least one first clamping element (2) and at least one second clamping element (3), wherein the at least one first clamping element (2) is arranged on a first side of a clamping gap (4) and the at least second clamping element (3) is arranged on a second side of the clamping gap (4) located opposite the first side, wherein at least one of the clamping elements (2, 3) is divided into segments (5, 6) which are separated from one another at least in one direction parallel to a longitudinal extension of the clamping gap (4), wherein both the at least one first clamping element (2) and the at least one second clamping element (3) are divided into segments (5, 6) which are separated from one another at least in one direction parallel to a longitudinal extension of the clamping gap (4), wherein a segment (6) of the at least one second clamping element (3) opposes each segment (5) of the at least one first clamping element (2), wherein a segment (5) of the at least one first clamping element (2) and a segment (6) of the at least one second clamping element (3) opposing said segment (5) form a pair of gripping jaws, wherein the segments (5, 6) forming a pair of gripping jaws are mounted so as to be displaceable in a direction extending perpendicularly or transversely to the longitudinal extension of the clamping gap (4), wherein the at least two grippers (1) are each arranged on at least one robot arm (23, 24); or the device comprises at least two opposing portals (10), wherein each of the at least two grippers (1) is linearly displaceable along one of the at least two portals (10), wherein between the two portals (10), a cross member (12) connecting longitudinal members (11) of the two portals can be arranged, wherein the cross member (12) is mounted on the longitudinal members (11) so as to be displaceable in a longitudinal extension thereof, and wherein the at least two grippers (1) are mounted so as to be displaceable along the cross member (12) and transversely to the longitudinal extension of the longitudinal members (11).

2. The device according to claim 1, **characterized in that** the grippers (1) are each mounted so as to be vertically displaceable in guides (13) displaceable along the cross member (12).

3. The device according to claim 1 or 2, **characterized in that** the grippers (1) are mounted on the guides (13) so as to be rotatable about at least one axis, preferably extending in parallel to the cross member (12), in each case.

4. The device according to one of claims 1 to 3, **characterized in that** the at least one pressing head (14) comprises at least one pressing roller (15).

5. The device according to one of claims 1 to 4, **characterized in that** the mold (9) is mounted so as to be rotatable about at least one axis.

6. The device according to one of claims 1 to 5, **characterized in that** it comprises a holder (16) for a storage reel (17) of the sheet-like material as well as at least one cutting device for cutting the sheet-like material.

7. A method for producing a workpiece (19) from a sheet-like material, **characterized in that** in a step i) a strip (18) of the sheet-like material is cut to shape and this strip (18) in step ii) is, by means of two grippers (1), which are each formed with at least one first clamping element (2) and at least one second clamping element (3), wherein the at least one first clamping element (2) is arranged on a first side of a clamping gap (4) and the at least second clamping element (3) is arranged on a second side of the clamping gap (4) located opposite the first side, wherein at least one of the clamping elements (2, 3) is divided into segments (5, 6) which are separated from one another at least in one direction parallel to a longitudinal extension of the clamping gap (4), wherein both the at least one first clamping element (2) and the at least one second clamping element (3) are divided into segments (5, 6) which are separated from one another at least in one direction parallel to a longitudinal extension of the clamping gap (4), wherein a segment (6) of the at least one second clamping element (3) opposes each segment (5) of the at least one first clamping element (2), wherein a segment (5) of the at least one first clamping element (2) and a segment (6) of the at least one second clamping element (3) opposing said segment (5) form a pair of gripping jaws, wherein the segments (5, 6) forming a pair of gripping jaws are mounted so as to be displaceable in a direction extending perpendicularly or transversely to the longitudinal extension of the clamping gap (4), held and positioned above a mold (9), wherein in a step iii) the strip (18) is pressed against the mold (9) by means of a pressing head (14) and is adapted to the contour of the mold by movement of the pressing head, wherein during step iii) the strip is stretched by means of the grippers (1).

8. The method according to claim 7, **characterized in that** prior to step ii) cuts are brought into the strip, said cuts being parallel to one another.

9. The method according to claim 7 or 8, **characterized in that** the strip (18) during step iii) is placed down defined by a previously positioned strip in particular transversely to the longitudinal extension by movements of the grippers (1).

## Revendications

1. Dispositif (8) pour la fabrication d'une pièce à partir d'au moins un matériau en forme de film, le dispositif (8) comprenant une forme (9) correspondant à la pièce pour le matériau en forme de film, le dispositif comprenant au moins une tête de pressage (14) interagissant avec la forme (9) pour le matériau en forme de film, le dispositif comprenant au moins deux pinces (1) avec au moins un premier élément de serrage (2) et au moins un deuxième élément de serrage (3), l'au moins un premier élément de serrage (2) étant disposé sur un premier côté d'un interstice de serrage (4) et l'au moins un deuxième élément de serrage (3) étant disposé sur un deuxième côté, opposé au premier côté, de l'interstice de serrage (4), au moins un des éléments de serrage (2, 3) étant divisé en segments (5, 6), qui sont séparés entre eux dans au moins une direction parallèle à l'extension longitudinale de l'interstice de serrage (4), aussi bien l'au moins un premier élément de serrage (2) que l'au moins un deuxième élément de serrage (3) étant divisés en segments (5, 6), qui sont séparés entre eux au moins dans une direction parallèle à une extension longitudinale de l'interstice de serrage (4), moyennant quoi, à chaque segment (5) de l'au moins un premier élément de serrage (2), fait face un segment (6) de l'au moins un deuxième élément de serrage (3), un segment (5) de l'au moins un premier élément de serrage (2) et un segment (6), disposé en face de ce segment (5), de l'au moins un deuxième élément de serrage (3), constituant une paire de mâchoires de préhension, les segments (5, 6) constituant une paire de mâchoires de préhension étant montés de manière coulissante dans une direction normale ou transversale par rapport à l'extension longitudinale de l'interstice de serrage (4), les au moins deux pinces (1) étant disposées sur au moins un bras de robot (23, 24) ;
ou le dispositif comprend au moins deux portails (10) en face l'un de l'autre, chacune des deux pinces (1) pouvant coulisser de manière linéaire le long des au moins deux portails (10), moyennant quoi, entre les deux portails (10), un support transversal (12) reliant les supports longitudinaux (11) des deux portails, le support transversal (12) étant monté de manière coulissante dans une extension longitudinale des supports longitudinaux (11) sur ceux-ci et
les au moins deux pinces (1) étant montées de manière coulissante le long du support transversal (12) et transversalement par rapport à l'extension longitudinale des supports longitudinaux (11).

2. Dispositif selon la revendication 1, **caractérisé en ce que** les pinces (1) sont montées de manière coulissante verticalement chacune dans des guidages (13) coulissant le long du support transversal (12).

3. Dispositif selon la revendication 1 ou 2, **caractérisé en ce que** les pinces (1) sont montées de manière rotative sur les guidages (13) chacune autour d'au moins un axe s'étendant de préférence parallèlement au support transversal (12).

4. Dispositif selon l'une des revendications 1 à 3, **caractérisé en ce que** l'au moins une tête de pressage (14) comprend au moins un galet de pressage (15).

5. Dispositif selon l'une des revendications 1 à 4, **caractérisé en ce que** la forme (9) est montée de manière rotative autour d'au moins un axe.

6. Dispositif selon l'une des revendications 1 à 5, **caractérisé en ce qu'**il comprend un support (16) pour un rouleau de stockage (17) du matériau en forme de film ainsi qu'au moins un dispositif de coupe pour la découpe du matériau en forme de film.

7. Procédé pour la fabrication d'une pièce (19) à partir d'un matériau en forme de film, **caractérisé en ce que**, dans une étape i), une bande (18) du matériau en forme de film, est découpée et cette bande (18) étant dans une étape ii), au moyen de deux pinces (1), qui sont conçues chacune avec au moins un premier élément de serrage (2) et au moins un deuxième élément de serrage (3), l'au moins un premier élément de serrage (2) étant disposé sur un premier côté de l'interstice de serrage (4) et l'au moins un deuxième élément de serrage (3) étant disposé sur un deuxième côté, opposé au premier côté, de l'interstice de serrage (4), au moins un des éléments de serrage (2, 3) étant divisé en segments (5, 6), qui sont séparés entre eux au moins dans une direction parallèle à une extension longitudinale de l'interstice de serrage (4), aussi bien l'au moins un premier élément de serrage (2) que l'au moins un deuxième élément de serrage (3) étant divisés en segments (5, 6), qui sont séparés entre eux au moins dans une direction parallèle à une extension longitudinale de l'interstice de serrage (4), moyennant quoi, à chaque segment (5) de l'au moins un premier élément de serrage (2), fait face un segment (6) de l'au moins un deuxième élément de serrage (3), un segment (5) de l'au moins un premier élément de serrage (2) et un segment (6), en face de ce segment (5), de l'au moins un deuxième élément de serrage (3) constituant une paire de mâchoires de préhension, les segments (5, 6) constituant une paire de mâchoires de préhension étant montés de manière coulissante dans une direction s'étendant de manière normale ou transversale par rapport à l'extension longitudinale de l'interstice de serrage (4), prise en charge et positionnée par l'intermédiaire d'une forme (9), moyennant quoi, dans une étape iii), la bande (18) est pressée, au moyen d'une tête de pressage (14), contre la forme (9) et est adaptée, à l'aide du déplacement de la tête de pressage, au contour de la forme, moyennant quoi, pendant l'étape iii), la bande est tendue au moyen des pinces (1).

8. Procédé selon la revendication 7, **caractérisé en ce que**, avant l'étape ii), des découpes parallèles sont réalisées dans la bande.

9. Procédé selon la revendication 7 ou 8, **caractérisé en ce que** la bande (18) est déposée, pendant l'étape iii), grâce à des déplacements des pinces (1), de manière définie, plus particulièrement transversalement par rapport à l'extension longitudinale, sur une bande déposée précédemment.
